# EUROPEAN PATENT SPECIFICATION

(11) **EP 3 210 892 B1**
(45) Date of publication and mention of the grant of the patent: **02.01.2019**
(21) Application number: 17382095.2
(22) Date of filing: 27.02.2017
(51) Int. Cl.: B64F 1/16, B60T 3/00, B60P 3/077

(54) **WHEEL CHOCK FOR LOADING BAY**
RADBLOCKIERUNG FÜR LADEBUCHT
CALE POUR QUAI DE CHARGEMENT

(30) Priority: 29.02.2016 ES 201630255 U
(43) Date of publication of application: 30.08.2017
(73) Proprietor: Burgos Quero, Juan, 08150 Parets del Valles (ES)
(72) Inventor: Burgos Quero, Juan, 08150 Parets del Valles (ES)
(74) Representative: Ponti & Partners, S.L.P

(56) References cited:
- FR-A1- 3 010 990
- US-A1- 2011 162 916
- US-A1- 2015 027 818

## Description

The present invention relates to a mechanical device for chocking vehicles and trailers in loading and unloading bays to prevent them from moving from their position with respect to the bay while said loading and unloading actions are performed.

### Background of the invention

Various mechanical devices for chocking trucks and their trailers are known to exist and, therefore, form part of the state of the art. These mechanical devices, and which therefore allow manual use thereof, usually move along the guide installed in the bay for parking vehicles until anchored in a certain position, which must coincide with an anchoring point of the chock on said guide.

The anchoring points of known chocks are distributed along the guide discreetly in the manner of holes or slots on the guide and use anchoring pins or means for fixing in said holes or slots, and with a distance therebetween usually ranging between 5 cm and 10 cm, in the case of devices with greater adjustment possibilities, due to which it is very probable that the chock does not coincide in its anchoring point with the wheel of the vehicle or trailer to be retained in the loading and unloading position.

This clearance between the position of the chock and the wheel of the vehicle causes the inertia generated when the vehicle starts to move with the chock installed to be much greater than if it were adjustable, due to which the blows against the chock can represent a considerable force and the damages to the chock device can eventually cause it to malfunction, in addition to not correctly retain the vehicle.

Furthermore, if said chocks coincide at any point with the position of the wheel of the vehicle to be retained, once the loading of the vehicle begins, it can cause a slight movement thereof against the chock, making it difficult to withdraw said chock from the retention position of the vehicle due to the pressure of the vehicle against the surface of the chock performing the retention, preventing the possibility of moving said retention surface to release the truck from its position.

Other systems must use hydraulic, pneumatic or ancillary means of the mechanical means, complicating the manufacture and maintenance thereof.

Lastly, the anchoring points of known chocking systems are disposed on the upper or lateral part thereof, directly exposed to the entrance of dirt, which can eventually impair the functioning of the anchoring in the desired position. US 2011/0162916 A1 discloses a chocking device with the principle features of the preamble of claim 1.

### Description of the invention

The chocking device of the invention makes it possible to resolve the aforementioned drawbacks, presenting advantages such as having a chocking device for vehicles and trailers, of mechanical type, and which can therefore be used manually and is susceptible of being motorised if desired and, therefore, without need for a power supply related to chock movement means, if not desired, that make it possible to place the chock in contact with the wheel with great accuracy, regardless of the position of said wheel, and which enables unblocking thereof even if it has the pressure of said wheel on the chock itself.

The chocking device, which has mechanically-based elements, is formed by at least one structure/carriage that moves by a guidance system installed in loading and unloading bays, preferably a fixation structure that serves as a guide itself.

The structure/carriage of the chocking device has a retention arm for retaining the wheel, which can move from a retracted position, which does not interfere with the wheels of the parked vehicle, and a deployed position that intercepts the travel path of said vehicle.

The movement of said structure/carriage is performed by means of the aforementioned guidance system, which advantageously includes the movement of a discreet system for positioning and moving the structure/carriage formed by openings, teeth or interlockings for said positioning and forward movement, that will enable the positioning thereof at intervals of less than 5 cm and preferably at intervals of between 0.5 cm to 1.5 cm, as preferably performed using saw teeth.

In its interior, the chock structure/carriage has a movement/blocking piece having means complementary to the openings, teeth or interlockings of the guidance system, placing them in contact with each other, and limiting free movement only in one direction and automatically blocking it in the other direction, due to having a shape that enables said free movement in one direction and having to clear another certain shape in the other direction, although with a release system that enable the unblocking thereof and, therefore, movement in any of the two directions.

The preferred guidance system uses a toothed rail wherealong the structure/carriage will move, with its teeth inclined in the direction of entry of the vehicle in the bay and with an area perpendicular to the direction of movement, in the direction of departure of the vehicle from the bay, for automatically blocking said direction of movement by means of said configuration of the teeth. Likewise, for this example, the movement/blocking piece of the structure/carriage has saw teeth in a manner complementary to that of the guidance system which cause them to come into contact through pressure means, so that the movement of said structure/carriage is performed tooth by tooth, thereby enabling movement thereof in one direction and blocking it in another, upon blocking the perpendicular sections of the guide teeth and movement/blocking piece.

This mechanically-based movement system makes it possible to block the structure/carriage in the direction automatically chosen by the mechanical configuration of the movement/blocking piece and, therefore, blocking of said direction of movement, having means for releasing said blockage, which may be a system that eliminates the pressure exerted on the movement piece or that, in general, clears the limitation of the shape of the system using the guidance system, thereby allowing it to come into contact with the guidance system and, therefore, the chock structure/carriage can move along the length of the guide, in addition to other release means that avoid the default blockage of the system in one of the directions, being released on becoming actuated.

When the release means are no longer used, the movement/blocking piece of the chock structure/carriage becomes blocked again for movement thereof in one of the directions.

In this manner, once the vehicle enters the bay and it has stopped in the desired position to perform loading and unloading operations, the chock, which can usually be found in the part that is rearmost and nearest the bay, will become unblocked from its position using the release means, since the movement in the direction of departure of the vehicle from its loading and unloading position is preferably blocked, such that once unblocked said carriage can move along the guide until reaching the position where the wheel to be retained is located, where the release means no longer act, so that the chock can only move freely in the direction of adjustment towards the wheel to be retained, in the opposite direction to that of the departure of the vehicle from the bay.

At that point, the retention arm that was in its retracted position moves, preferably manually, towards its position of interception of the travel path of the wheel, whereupon the structure/carriage moves with the arm deployed, reversing towards the loading bay until finding the wheel, since in that direction it has freedom of movement, for example due to having the inclined portions of the teeth of the guidance system and of the movement/blocking piece.

On being able to fix the position of the structure/carriage, as accurately as the dimension of each of the teeth, interlockings, openings or other means of positioning and forward travel, the wheel to be retained can be perfectly adjusted in order to avoid possible inertias of the vehicle that may occur in the event of inaccurate adjustments. This is achieved by the small distance between said teeth, interlockings, openings or other positioning means and forward travel.

Furthermore, on disposing means for releasing the blocking position of the movement/blocking piece, in the event that the vehicle moves during loading, exerting greater pressure on the retention arm, and once we wish to retract the retention arm to release the vehicle, it may occur that said pressure of the vehicle does not allow the arm to be easily retracted, but by releasing the movement/blocking piece the arm could be moved towards a position without said pressure, thereby retracting without difficulty to allow the vehicle to depart.

In the interior of the structure/carriage there is a guidance coupling system, preferably formed by bearings. This coupling system by bearings has damping means that correct the pressures exerted on the structure/carriage. In this manner, the coupling between the movement/blocking piece and the guidance system does not receive any load other than that of said damping means of the coupling system for coupling to the guidance system.

This system enables the fully manual actuation thereof, although due to being a mechanical system it allows monitoring thereof to perform the movement in an automated manner, in addition to its anchoring and even positioning of the retention arm.

Likewise, the chocking device is designed to be used on each side of the vehicle, with the logical changes in position of the components to be actuated.

In this manner, a device has been achieved which allows optimum adjustment to the position of the wheel of the vehicle so that, if it should move, it will not gain inertia and strongly strike against the retention system, all thanks to a more accurate adjustment of the chock blocking position.

Other details and characteristics will become evident in the course of the following description, in which reference is made to the drawings accompanying this description, wherein a graphic representation of the invention is shown by way of non-limiting example.

### Brief description of the figures

In order to better understand the foregoing description, it is accompanied by drawings wherein, schematically and solely by ways of non-limiting example, a practical case of embodiment is represented.
Figure 1 shows a perspective view of the chock to be installed in the bay loading zone.
Figure 2 shows a cross-sectional view of the release/pedal system and chock retention arm.
Figure 3 shows a cross-sectional view of the bearing system.
Figure 4 shows a plan view in longitudinal section of the detail of the bearing damping system.
Figure 5 shows a lower perspective view, with an interior view of the structure/carriage, of the detail of the join between the movement/blocking piece pressed against the guidance system with saw teeth.
Figure 6 shows a plan view of the mechanical chocking device installed in a loading bay, with the carriage in its original position and in its retention position.

### Description of a preferred embodiment

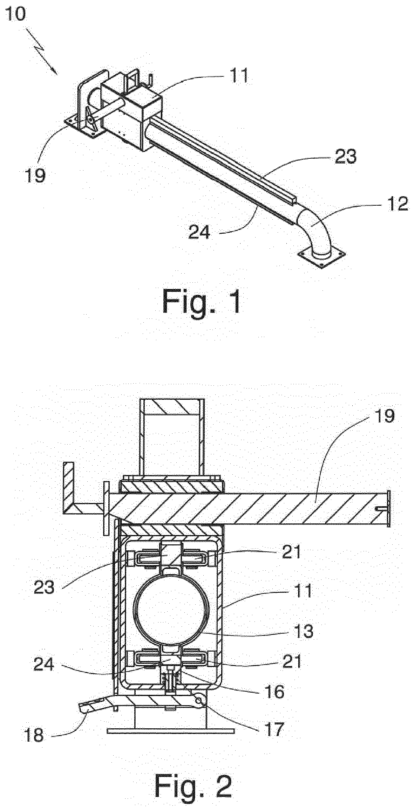

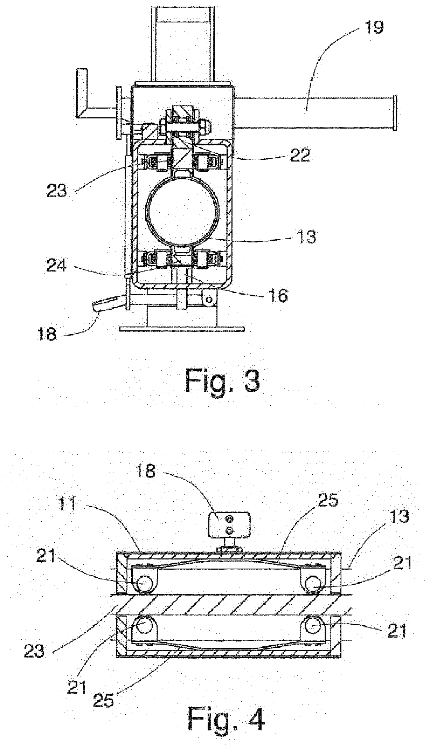

In one of the preferred embodiments of the invention, as shown in figures 1, 2, 3 and 4, the mechanical chocking device (10) is formed by a structure/carriage (11) mounted on a guide (12), which in this case is the same chock installation structure in the vehicle parking zone in the loading and unloading bays. Said structure/carriage (11) envelops the cylinder (13) of the guide (12) and couples two bearing systems (21, 22) to the guidance system, which is formed of an upper rib (23) and a lower rib (24) solidly connected to said cylinder (13), and that run along most of its length.

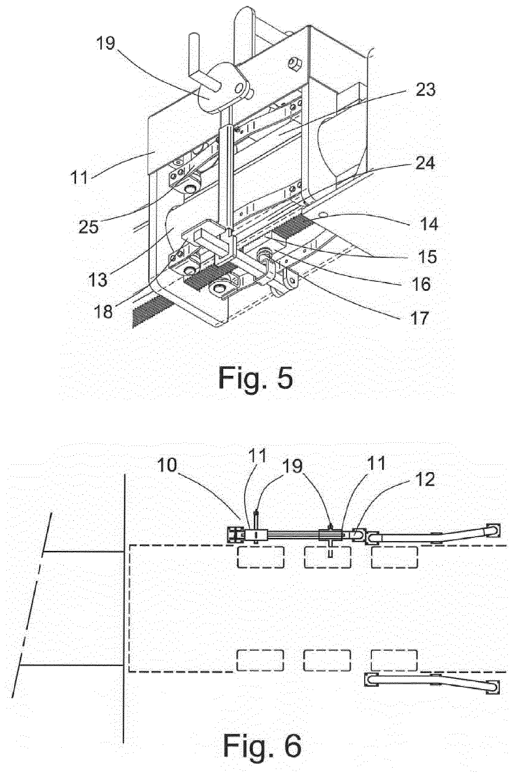

The lower rib (24) of the cylinder (13) has saw teeth (14) along its entire length complementary to the saw teeth (15) of the movement/blocking piece (16) of the structure/carriage (11) of the chocking device (10), wherein said movement/blocking piece (16), as can be observed in figure 5, is formed by said saw teeth (15) joined to the structure/carriage (11) by an element that exerts pressure so that that the saw teeth (14, 15) come into contact and form a movement system in the manner of a rack, said pressure element being a spring (17) in the present embodiment.

As seen earlier, the movement/blocking piece (16) has the mobility granted thereto by the spring, allowing said movement piece (16) to move in the direction of the teeth with little opposition, overcoming the height of the teeth. Logically, it is automatically blocked provided that the movement/blocking piece (16) is pressed against the teeth (14) of the lower rib (24). The length between the teeth shall normally range between 4 mm and 8 mm, with a heights of 2 mm to 5mm although other distances are possible.

The movement/blocking piece (16) has releasing means to allow the movement of the structure/carriage (11) of the chocking device (10) in the direction of the vertical portion of the teeth (14, 15). These release means, in this embodiment, are formed by a pedal (18) that modifies the position of the movement/blocking piece (16), preventing the teeth (14, 15) from coming into contact, thereby freeing movement in all directions of travel, when said pedal (18) is pressed, returning the piece to its usual position when the pedal (18) is no longer pressed (18).

The structure/carriage (11) has a retention arm (19) that is in charge of coming into contact with the wheel of the vehicle whose position we wish to block. This arm (19) has two positions, a retracted position in which it does not interfere with the travel path of the wheel of the vehicle and, therefore, does not pose a problem for the structure/carriage (11) to move along the guide (12), and another deployed position that occupies a position which interferes with the other deployed position, which occupies a position that interferes with the travel path of the vehicle.

With the aim of facilitating the movement of the structure/carriage (11) along the guide (12) when the arm (19) is retracted, said arm (19) actuates the pedal (18), thereby enabling the structure/carriage (11) to move freely in any direction. When it deploys the arm (19) to its retention position, the pedal (18) is no longer actuated, thereby automatically blocking one direction of movement, provided that the pedal (18) is no longer voluntarily actuated.

This retention arm (19) may incorporate electronic systems that indicate whether it is in a retracted or deployed position, so as to ensure that the position of the vehicle is blocked in order to commence the loading and unloading operations.

In this manner, when the vehicle enters the bay and is disposed in the correct loading and unloading position, as can be observed in figure 6, the user who manages the chocking device (10), which is usually in its closest position to the bay, releases the movement/blocking piece (16) by retracting the arm (19), which exerts pressure on the pedal (18) that separates the movement piece and guidance teeth (14), in order to move manually in the direction of departure of the vehicle, which is the direction in which the teeth (14, 15) have their vertical blocking parts to prevent said departure movement of the vehicle.

Once the structure/carriage (11) is released in order to be able to move, it is taken (11) to the position of the wheel to be retained and, near it, slightly in front of said wheel, the arm (19) is deployed such as to be in the travel path of said wheel. Since the structure/carriage (11) can move in a direction opposite to the departure of the vehicle, the arm (19) of the structure/carriage (11) is pushed against the wheel so that it is fixed in said contact position, all thanks to the fact that the teeth (14, 15) allow said much more accurate fixation than other known discreet systems.

In said position wherein the wheel and arm (19) are in contact, the departure movement shall be blocked, as mentioned earlier, by the configuration of the teeth (14, 15) and, in the event that, while loading the vehicle, the pressure exerted by the vehicle on the arm (19) does not allow retraction thereof, the user may press the pedal (18) of the chock and unblock said direction of movement in order to prevent said pressure on the arm (19) and retract it without problem, and allow the departure of the vehicle.

In order to ensure that the movement/blocking piece (16) with its teeth (15) works in the correct direction over the teeth (14) of the lower rib (24) of the cylinder (13), two bearing systems (21, 22) have been disposed, one (21) that acts on the movement on the horizontal plane of the structure, following the sides of the ribs (23, 24) and another (22) that acts on the movement on the vertical plane of the structure/carriage (11) following the upper part of the upper rib (23), where the two bearing systems (21, 22) are dampened by a leaf spring system (25), although alternatively spring or equivalent systems may be used, so that the pressures of the vehicle on the arm do not cause some teeth to move with respect to others in directions that may not be the optimum blocking or movement directions.

Alternatively to the present embodiment, the mechanical chocking device (10) may be motorised, for example, a motorised pinion that acts on another toothed surface of the guidance ribs (12), or with similar systems that enable the automated movement of the structure/carriage (11) along said guide (12), in addition to the automatic retraction or deployment of the arm (19) or the automated actuation of the blocking release pedal (18).

Other alternatives to this embodiment are possible through the use of a system of interlockings of the position of the structure/carriage in the guidance system and a movement/blocking piece that follows the guidance system and that can freely move in one direction but not in the other, which requires the use of release systems.

The interlocking systems that can be used by the guidance system include openings, teeth, recesses, hooks, etc., and the automated blocking means and movement/blocking piece in one direction and free movement in another that can be used include teeth, crowns or pinions, hooks etc., which are automatically unblocked in one direction by mechanical means, whether due to the coupling to the guidance system or to the retention of a direction of rotation or interlocking with elastic movement in one direction and that is not allowed in the other direction. These interlocking systems can be located below as in the preferred embodiment, to avoid accumulation of dirt that could fall thereon, or be located in another position, such as a lateral or even upper position.

Also alternatively, the damping systems created by the bearings can act on the cylinder directly or on other points of the chocking device that make it possible to correct the direction of the force exerted on the retention arm to redirect it the direction of the guide of the device.

Despite the fact that mention has been made to a specific embodiment of the invention, it is evident for the person skilled in the art that the described mechanical device for chocking vehicles and trailers in loading and unloading bays is susceptible of a number of variations and modifications, and that all the aforementioned details may be replaced by other, technically equivalent ones, without detracting from the scope of protection described by the attached claims.

## Claims

1. A MECHANICAL DEVICE FOR CHOCKING VEHICLES AND TRAILERS IN LOADING AND UNLOADING BAYS of the type that move along a guide (12) installed in said loading and unloading bays, and that use a retention system (19) on the wheels to block the movement of the vehicles in their loading and unloading position, the device (10) is formed by mechanically-based movement components, and in that it has at least one guidance system (12) with a discreet structure/carriage (11) positioning and displacement system (24) formed by openings, teeth, interlockings or other positioning and forward movement means (14), for said positioning and forward movement, and by a structure/carriage (11) which has a movement piece (16) through the guidance system (12), which has means that are complementary (15) to the openings, teeth or interlocking (14) of the guidance system (12), placing them in contact with each other and limiting the free movement to only one direction and automatically blocking it in the other direction, although with a release system (18) that enables unblocking thereof and, therefore, movement in any direction, **characterised in that** the structure/carriage (11) has a coupling system to the guidance system (12) formed by bearings (21, 22) wherein the coupling system has damping means (25) that correct the pressures exerted on the structure/carriage.

2. THE MECHANICAL DEVICE FOR CHOCKING VEHICLES AND TRAILERS IN LOADING AND UNLOADING BAYS, according to claim 1, **characterised in that** the guidance system (12) is formed by installed saw teeth (14) wherealong the structure/carriage (11) moves and wherein the movement/blocking piece (16) has complementary saw teeth (15) that are complementary to the teeth (14) installed in the guidance systems (12) whereon it moves, wherein both teeth (14, 15) are in contact, enabling movement in one direction and automatically blocking it in the other by disposing a release system (18) that uncouples said saw teeth (14, 15).

3. THE MECHANICAL DEVICE FOR CHOCKING VEHICLES AND TRAILERS IN LOADING AND UNLOADING BAYS, according to claim 2, **characterised in that** the movement/blocking piece (16) is joined to the structure/carriage (11) by elastic means (17) that press the teeth (15) of said movement piece (16) against the teeth (14) of the guidance system (12), allowing these elastic means (17) to clear the height of the teeth (14) in the direction of their inclined portion, thereby moving in one direction and automatically blocking movement in the direction of the portions of the teeth (14) that are perpendicular to the direction of movement.

4. THE MECHANICAL DEVICE FOR CHOCKING VEHICLES AND TRAILERS IN LOADING AND UNLOADING BAYS, according to claim 2, **characterised in that** the movement/blocking piece (16) is connected to release means (18) which, on being actuated, separate the movement piece (16) from the toothed guide (24), enabling free movement in both directions.

5. THE MECHANICAL DEVICE FOR CHOCKING VEHICLES AND TRAILERS IN LOADING AND UNLOADING BAYS, according to claim 1, **characterised in that** the retention system is formed by an arm (19) that can be disposed in a retracted position, without intercepting the travel path of the direction of movement of the wheels, or in a deployed position that intercepts the travel path of the movement of the wheels.

6. THE MECHANICAL DEVICE FOR CHOCKING VEHICLES AND TRAILERS IN LOADING AND UNLOADING BAYS, according to claims 4 and 5, **characterised in that** the retention system (19) is connected to the release means (18), such that in the retracted position of the retention system (19) the release means (18) are automatically actuated.

7. THE MECHANICAL DEVICE FOR CHOCKING VEHICLES AND TRAILERS IN LOADING AND UNLOADING BAYS, according to claim 1, **characterised in that** the guide (12) has an upper rib (23) and another lower rib (24) and, solidly connected to the lower part of said lower rib (24), the interlockings, openings, teeth or other positioning and forward movement means (14) wherealong the movement/blocking piece (16) moves.

8. THE MECHANICAL DEVICE FOR CHOCKING VEHICLES AND TRAILERS IN LOADING AND UNLOADING BAYS, according to claims 1 and 7, **characterised in that** the structure/carriage (11) envelops the cylinder that forms the guide (12) whereon the groups of bearings (21, 22) are assembled, with their corresponding damping system (25), for the movement of the structure/carriage (11) therealong (12).

9. THE MECHANICAL DEVICE FOR CHOCKING VEHICLES AND TRAILERS IN LOADING AND UNLOADING BAYS, according to claims 7 and 8, **characterised in that** the groups of bearings (21, 22) are installed such that one group (22) acts on the upper rib (23), correcting the pressures on the vertical axis, and the other group (21) acts on the side of both ribs (23, 24), correcting the pressures on the horizontal axis.

10. THE MECHANICAL DEVICE FOR CHOCKING VEHICLES AND TRAILERS IN LOADING AND UNLOADING BAYS, according to claim 8, **characterised in that** the groups of bearings (21, 22) are installed with a damping system composed by a leaf spring (25).

11. THE MECHANICAL DEVICE FOR CHOCKING VEHICLES AND TRAILERS IN LOADING AND UNLOADING BAYS, according to claim 1, **characterised in that** the retention system (19) has an electronic system that indicates the retracted or deployed position thereof.

12. THE MECHANICAL DEVICE FOR CHOCKING VEHICLES AND TRAILERS IN LOADING AND UNLOADING BAYS, according to claim 1, **characterised in that** the mechanical device (10) is manual, without need for a power supply for the movement of the structure/carriage (11), retention system (19) and release means (18).

13. THE MECHANICAL DEVICE FOR CHOCKING VEHICLES AND TRAILERS IN LOADING AND UNLOADING BAYS, according to claim 1, **characterised in that** the mechanical chocking device (10) is motorised, with respect to the movement of the structure/carriage, retention system (19) and release means (18).

## Patentansprüche

1. Eine mechanische Vorrichtung zum Festkeilen von Fahrzeugen und Anhängern in Lade- und Entladebuchten des Typs, der sich entlang einer in den Lade- und Entladebuchten eingebauten Führungseinrichtung (12) bewegt und der ein Rückhaltesystem (19) auf den Rädern verwendet, um die Bewegung der Fahrzeuge in ihrer Lade- und Entladeposition zu sperren, wobei die Vorrichtung (10) gebildet ist durch: mechanisch basierte Bewegungskomponenten, und wobei dieselbe zumindest ein Führungssystem (12) mit einem diskreten System zum Positionieren und Verschieben (24) einer Struktur/eines Wagens (11) aufweist, das durch Öffnungen, Zähne, Verriegelungen oder eine andere Einrichtung zum Positionieren und Vorwärtsbewegen (14) gebildet ist, für das Positionieren und Vorwärtsbewegen; und durch eine Struktur/einen Wagen (11), die/der ein Bewegungsstück (16) durch das Führungssystem (12) hindurch aufweist, das eine Einrichtung aufweist, die zu den Öffnungen, Zähnen oder einer Verriegelung (14) des Führungssystems (12) komplementär (15) ist, dieselben in Kontakt miteinander anordnet und die freie Bewegung auf lediglich eine Richtung beschränkt und diese automatisch in der anderen Richtung sperrt, jedoch mit einem Freigabesystem (18), das ein Entsperren derselben und deshalb eine Bewegung in jede Richtung ermöglicht, **dadurch gekennzeichnet, dass** die Struktur/der Wagen (11) ein Kopplungssystem mit dem Führungssystem (12) aufweist, das durch Lager (21, 22) gebildet ist, wobei das Kopplungssystem eine Dämpfungseinrichtung (25) aufweist, die die auf die Struktur/den Wagen ausgeübten Druckkräfte korrigiert.

2. Die mechanische Vorrichtung zum Festkeilen von Fahrzeugen und Anhängern in Lade- und Entladebuchten gemäß Anspruch 1, **dadurch gekennzeichnet, dass** das Führungssystem (12) durch eingebaute Sägezähne (14) gebildet ist, wobei die Struktur/der Wagen (11) sich entlang derselben bewegt und wobei das Bewegungs-/Sperrstück (16) komplementäre Sägezähne (15) aufweist, die zu den Zähnen (14), die in den Führungssystemen (12) eingebaut sind, auf denen dasselbe sich bewegt, komplementär sind, wobei beide Zähne (14, 15) in Kontakt sind, eine Bewegung in einer Richtung ermöglichen und diese automatisch in der anderen Richtung sperren, indem ein Freigabesystem (18) angeordnet ist, das die Sägezähne (14, 15) entkoppelt.

3. Die mechanische Vorrichtung zum Festkeilen von Fahrzeugen und Anhängern in Lade- und Entladebuchten gemäß Anspruch 2, **dadurch gekennzeichnet, dass** das Bewegungs-/Sperrstück (16) mit der Struktur/dem Wagen (11) durch eine elastische Einrichtung (17) verbunden ist, die die Zähne (15) des Bewegungsstücks (16) gegen die Zähne (14) des Führungssystems (12) presst, wodurch es der elastischen Einrichtung (17) ermöglicht wird, die Höhe der Zähne (14) in Richtung des geneigten Abschnitts derselben zu überwinden, wodurch dieselben sich in einer Richtung bewegen und automatisch eine Bewegung in der Richtung der Abschnitte der Zähne (14) gesperrt wird, die senkrecht zu der Bewegungsrichtung sind.

4. Die mechanische Vorrichtung zum Festkeilen von Fahrzeugen und Anhängern in Lade- und Entladebuchten gemäß Anspruch 2, **dadurch gekennzeichnet, dass** das Bewegungs-/Sperrstück (16) mit einer Freigabeeinrichtung (18) verbunden ist, die bei Betätigung das Bewegungsstück (16) von der gezahnten Führungseinrichtung (24) trennt, wodurch eine freie Bewegung in beide Richtungen ermöglicht wird.

5. Die mechanische Vorrichtung zum Festkeilen von Fahrzeugen und Anhängern in Lade- und Entladebuchten gemäß Anspruch 1, **dadurch gekennzeichnet, dass** das Rückhaltesystem durch einen Arm (19) gebildet ist, der in einer zurückgezogenen Position, ohne den Bewegungsweg der Bewegungsrichtung der Räder zu unterbrechen, oder in einer ausgefahrenen Position, die den Bewegungsweg der Bewegung der Räder unterbricht, angeordnet sein kann.

6. Die mechanische Vorrichtung zum Festkeilen von Fahrzeugen und Anhängern in Lade- und Entladebuchten gemäß Anspruch 4 und 5, **dadurch gekennzeichnet, dass** das Rückhaltesystem (19) mit der Freigabeeinrichtung (18) derart verbunden ist, dass die Freigabeeinrichtung (18) in der zurückgezogenen Position des Rückhaltesystems (19) automatisch betätigt wird.

7. Die mechanische Vorrichtung zum Festkeilen von Fahrzeugen und Anhängern in Lade- und Entladebuchten gemäß Anspruch 1, **dadurch gekennzeichnet, dass** die Führungseinrichtung (12) einen oberen Steg (23) und einen weiteren unteren Steg (24) und, fest verbunden mit dem unteren Teil des unteren Stegs (24), die Verriegelungen, Öffnungen, Zähne oder eine andere Einrichtung zum Positionieren und Vorwärtsbewegen (14) aufweist, entlang derer das Bewegungs-/Sperrstück (16) sich bewegt.

8. Die mechanische Vorrichtung zum Festkeilen von Fahrzeugen und Anhängern in Lade- und Entladebuchten gemäß Anspruch 1 und 7, **dadurch gekennzeichnet, dass** die Struktur/der Wagen (11) den Zylinder einhüllt, der die Führungseinrichtung (12) bildet, auf der die Gruppen von Lagern (21, 22) mit ihrem entsprechenden Dämpfungssystem (25) angeordnet sind, für die Bewegung der Struktur/ des Wagens (11) entlang derselben (12).

9. Die mechanische Vorrichtung zum Festkeilen von Fahrzeugen und Anhängern in Lade- und Entladebuchten gemäß Anspruch 7 und 8, **dadurch gekennzeichnet, dass** die Gruppen von Lagern (21, 22) derart eingebaut sind, dass eine Gruppe (22) auf dem oberen Steg (23) wirksam ist, wobei die Druckkräfte auf die vertikale Achse korrigiert werden, und die andere Gruppe (21) auf der Seite beider Rippen (23, 24) wirksam ist, wobei die Druckkräfte auf die horizontale Achse korrigiert werden.

10. Die mechanische Vorrichtung zum Festkeilen von Fahrzeugen und Anhängern in Lade- und Entladebuchten gemäß Anspruch 8, **dadurch gekennzeichnet, dass** die Gruppen von Lagern (21, 22) mit einem Dämpfungssystem eingebaut sind, das aus einer Blattfeder (25) gebildet ist.

11. Die mechanische Vorrichtung zum Festkeilen von Fahrzeugen und Anhängern in Lade- und Entladebuchten gemäß Anspruch 1, **dadurch gekennzeichnet, dass** das Rückhaltesystem (19) ein elektronisches System aufweist, das die zurückgezogene oder ausgefahrene Position desselben anzeigt.

12. Die mechanische Vorrichtung zum Festkeilen von Fahrzeugen und Anhängern in Lade- und Entladebuchten gemäß Anspruch 1, **dadurch gekennzeichnet, dass** die mechanische Vorrichtung (10) manuell ist, ohne eine Leistungsversorgung für die Bewegung der Struktur/des Wagens (11), des Rückhaltesystems (19) und der Freigabeeinrichtung (18) zu erfordern.

13. Die mechanische Vorrichtung zum Festkeilen von Fahrzeugen und Anhängern in Lade- und Entladebuchten gemäß Anspruch 1, **dadurch gekennzeichnet, dass** die mechanische Festkeilvorrichtung (10) bezüglich der Bewegung der Struktur/des Wagens, des Rückhaltesystems (19) und der Freigabeeinrichtung (18) motorisiert ist.

## Revendications

1. Dispositif mécanique pour caler des véhicules et des remorques dans des quais de chargement et de déchargement du type qui se déplace le long d'un guide (12) installé dans lesdits quais de chargement et de déchargement, et qui utilise un système de retenue (19) sur les roues pour bloquer le déplacement des véhicules dans leur position de chargement et de déchargement, le dispositif (10) est formé par des composants de déplacement à base mécanique, et en ce qu'il a au moins un système de guidage (12) avec un système de positionnement et de déplacement (24) de structure/chariot (11) discret formé par des ouvertures, des dents, des verrouillages ou d'autres moyens de positionnement et de déplacement vers l'avant (14), pour ledit positionnement et le déplacement vers l'avant, et par une structure/chariot (11) qui a une pièce mobile (16) à travers le système de guidage (12), qui a des moyens qui sont complémentaires (15) des ouvertures, des dents ou du verrouillage (14) du système de guidage (12), les plaçant en contact entre eux et limitant le déplacement libre à une seule direction en empêchant automatiquement le déplacement dans l'autre direction, bien qu'un système de libération (18) permette son déblocage et par conséquent le déplacement dans n'importe quelle direction, **caractérisé en ce que** la structure/chariot (11) a un système de couplage avec le système de guidage (12) formé par des paliers (21, 22), dans lequel le système de couplage a des moyens d'amortissement (25) qui corrigent les pressions exercées sur la structure/chariot.

2. Dispositif mécanique pour caler des véhicules et des remorques dans des quais de chargement et de déchargement selon la revendication 1, **caractérisé en ce que** le système de guidage (12) est formé par des dents de scie installées (14) le long duquel la structure/chariot (11) se déplace et dans lequel la pièce mobile/de blocage (16) a des dents de scie complémentaires (15) qui sont complémentaires des dents (14) installées dans les systèmes de guidage (12) sur lesquels elle se déplace, dans lequel les deux dents (14, 15) sont en contact, permettant le déplacement dans une direction et le bloquant automatiquement dans l'autre en disposant d'un système de libération (18) qui découple lesdites dents de scie (14, 15).

3. Dispositif mécanique pour caler des véhicules et des remorques dans des quais de chargement et de déchargement selon la revendication 2, **caractérisé en ce que** la pièce mobile/de blocage (16) est assemblée à la structure/chariot (11) par des moyens élastiques (17) qui compriment les dents (15) de ladite pièce mobile (16) contre les dents (14) du système de guidage (12), permettant à ces moyens élastiques (17) de dégager la hauteur des dents (14) dans la direction de leur partie inclinée, se déplaçant ainsi dans une direction et bloquant automatiquement le déplacement dans la direction des parties des dents (14) qui sont perpendiculaires à la direction de déplacement.

4. Dispositif mécanique pour caler des véhicules et des remorques dans des quais de chargement et de déchargement selon la revendication 2, **caractérisé en ce que** la pièce mobile/de blocage (16) est raccordée aux moyens de libération (18) qui, après avoir été actionnés, séparent la pièce mobile (16) du guide denté (24), permettant le déplacement libre dans les deux directions.

5. Dispositif mécanique pour caler des véhicules et des remorques dans des quais de chargement et de déchargement selon la revendication 1, **caractérisé en ce que** le système de retenue est formé par un bras (19) qui peut être disposé dans une position rétractée, sans intercepter la trajectoire de déplacement de la direction de déplacement des roues, ou dans une position déployée qui intercepte la trajectoire de déplacement du déplacement des roues.

6. Dispositif mécanique pour caler des véhicules et des remorques dans des quais de chargement et de déchargement selon les revendications 4 et 5, **caractérisé en ce que** le système de retenue (19) est raccordé aux moyens de libération (18), de sorte que dans la position rétractée du système de retenue (19), les moyens de libération (18) sont automatiquement actionnés.

7. Dispositif mécanique pour caler des véhicules et des remorques dans des quais de chargement et de déchargement selon la revendication 1, **caractérisé en ce que** le guide (12) a une nervure supérieure (23) et une autre nervure inférieure (24) et solidement raccordés à la partie inférieure de ladite nervure inférieure (24), les verrouillages, ouvertures, dents et autres moyens de positionnement et de déplacement vers l'avant (14) le long desquels la pièce mobile/de blocage (16) se déplace.

8. Dispositif mécanique pour caler des véhicules et des remorques dans des quais de chargement et de déchargement selon les revendications 1 et 7, **caractérisé en ce que** la structure/chariot (11) enveloppe le cylindre qui forme le guide (12) sur lequel les groupes de paliers (21, 22) sont assemblés, avec leur système d'amortissement (25) correspondant, pour le déplacement de la structure/chariot (11) le long de ce dernier (12).

9. Dispositif mécanique pour caler des véhicules et des remorques dans des quais de chargement et de déchargement selon les revendications 7 et 8, **caractérisé en ce que** les groupes de paliers (21, 22) sont installés de sorte qu'un groupe (22) agit sur la nervure supérieure (23), corrigeant les pressions sur l'axe vertical, et l'autre groupe (21) agit sur le côté des deux nervures (23, 24), corrigeant les pressions sur l'axe horizontal.

10. Dispositif mécanique pour caler des véhicules et des remorques dans des quais de chargement et de déchargement selon la revendication 8, **caractérisé en ce que** les groupes de paliers (21, 22) sont installés avec un système d'amortissement composé par un ressort à lames (25).

11. Dispositif mécanique pour caler des véhicules et des remorques dans des quais de chargement et de déchargement selon la revendication 1, **caractérisé en ce que** le système de retenue (19) a un système électronique qui indique sa position rétractée ou déployée.

12. Dispositif mécanique pour caler des véhicules et des remorques dans des quais de chargement et de déchargement selon la revendication 1, **caractérisé en ce que** le dispositif mécanique (10) est manuel et ne requiert pas d'alimentation électrique pour le déplacement de la structure/chariot (11), du système de retenue (19) et des moyens de libération (18).

13. Dispositif mécanique pour caler des véhicules et des remorques dans des quais de chargement et de déchargement selon la revendication 1, **caractérisé en ce que** le dispositif de calage mécanique (10) est motorisé, par rapport au déplacement de la structure/chariot, du système de retenue (19) et des moyens de libération (18).
